# EUROPEAN PATENT APPLICATION

(11) **EP 2 633 936 A1**
(43) Date of publication of application: **04.09.2013**
(21) Application number: 12157369.5
(22) Date of filing: 28.02.2012
(51) Int. Cl.: B23D 57/00, B28D 5/00

(54) **Holding device**

(71) Applicant: Meyer Burger AG, 3600 Thun (CH)
(72) Inventor: Schor, Raphael, 3018 Bern (CH)
(74) Representative: Patentbüro Paul Rosenich AG

(57) **Abstract**

The invention relates to a holding device (1) for holding and rocking a work piece (2) in a cutting machine (20), the holding device (1) comprising:
- a supporting part (9),
- a rocking part (5), being movably mounted relative to the supporting part (9),
- a fixing mechanism (6) arranged on the rocking part (5) for fixing a work piece (2) on the rocking part (5),
- a drive mechanism (26) for moving said rocking part (5) with respect to said supporting part (9), the drive mechanism (26) comprising:
- at least one drive pulley (16) rotatably mounted to the supporting part (9), and
- flexible pulling means (15) cooperating with the drive pulley (16) and having a first section (15a) and a second section (15b) extending from the drive pulley (16) towards the rocking part (5), the end of the first section (15a) and the end of the second section (15b) being fixedly mounted to the rocking part (5),
so that the first pulling means section (15a) pulls the rocking part (5) in a first moving direction (R1) when the drive pulley (16) rotates in a first direction and the second pulling means section (15b) pulls the rocking part (5) in a second moving direction (R2) being opposed to the first moving direction (R1) when the drive pulley (16) rotates in opposite direction.

## Description

The invention refers to a holding device in the wafer production industry for holding and rocking a work piece, particularly an ingot, brick or core, in a wafer cutting machine.

Particularly, the invention relates to the drive mechanism of a rocking unit on a multi wire sawing device to cut wafers from a brick or ingot.

The rocking unit is used for rocking and or positioning of the work piece during sawing. Like with a normal hand saw, it is beneficial not to cut with the teeth of the saw extending parallel to the work piece from beginning to the end.

A sawing device usually has a wire web formed between at least two wire guiding rolls. A piece of material (ingot, brick or core) is lowered into the wire web, while the wire is moving (cycling in a reciprocating motion in case of a diamond wire or moving in one direction with the use of slurry) and as such performing its sawing action, thereby the piece of material is cut into wafers.

This invention is related to slurry based as well as fixed abrasive sawing technology. Nowadays, wafers for semiconductor application, solar cells or sapphire for the manufacturing of LEDs, are cut more and more using fixed abrasives. The abrasives are fixedly attached to the metal wire. In this case there is no need for abrasives suspended in slurry that are transported by the metal wire to make a cut. A wire with fixed abrasives is usually a diamond wire. When cutting with fixed abrasives, a cutting or cooling fluid is needed.

These sawing technologies are used in the industry of semiconductors, electronic components, photovoltaics and photonics. Typical materials sawn are GaAs, germanium, polycrystalline or monocrystalline or mono-like silicon, InP, quartzes, sapphire, or other ceramic materials.

The clamping system is part of the cutting unit of the sawing device. It is responsible to hold the work piece in exact position during the cutting process. During this process, the wire guide rolls turn and the brick is pushed through the wire field. For high wafers quality (i.e. planarity) it may be essential that the work piece is held in an exact position while advancing through the wire web.

A rocking process is comparable to sawing a log by hand and holding the saw in different inclinations to the work piece to speed up the cut. Rocking the work piece during the sawing process is beneficial as the contact length of the wire with the work piece is decreased. Work piece rocking also increases the pressure per grit (corresponding to one diamond on the wire; being equivalent to one saw tooth) and therefore results in a higher cutting rate. While sawing, the spaces between the teeth of the saw (here e.g. diamonds on a diamond wire) are filled. Once a space is filled, the diamond downstream after it is filled (the one in front of the dirt when traveling in the direction of movement of the saw) no longer cuts. The dirt has to be removed from the space before it can cut again. This is usually done by spraying cutting fluid onto the wire. This occurs when the tooth leaves the cut. It is therefore beneficial to cut only a limited range so that the diamonds leave the cut often and are thus cleaned.

The rocking unit and its drive is part of the cutting process. It is responsible to rock the work piece during the cutting process. Rocking units with bow or arc segments as guiding elements for rotatably mounting the work piece holder are known from several prior art documents.

DE19517107 discloses for a wire cutting machine a holding device for holding and positioning a work piece. The goniometer-type positioning device is used to orient the crystal axis of the work piece relative to the cutting plane. DE19517107 discloses a mounting jig for the work piece which is composed of a clamp mechanism section and a tilting mechanism section. The mounting jig is constructed in such a manner that the work piece bonding block can be automatically clamped by first and second clamp cylinders. However, the possibility of a rocking movement of the work piece holder during the cutting process is not provided. Also the clamping mechanism is moved along with the rocking unit. This increases the mass of parts to be moved: firstly because the actuator has to be moved and secondly this requires a more stable frame.

US5735258 discloses for a wire cutting machine a holding device for holding and rocking a work piece during the cutting process. The work piece holder performs a pivot movement using arc guides in the holding device The drive mechanism for the rocking movement comprises a drive pinion in cooperation with a toothed rack. Holding device does not have an automatic fixing mechanism for fixing the work piece or the work piece holder to the rocking part of the holding device.

DE102004028323 discloses for a wire cutting machine a holding device for holding and rocking a work piece during the cutting process. An arc guide is provided in order to rotate the work piece by an angle less than 360°. DE102004028323 does not teach how to easily attach and detach the work piece or the work piece holder to the rocking part nor does it shown how the rocking motion is driven.

In connection with a wire cutting machine DE19851070 discloses for a holding device an arc segment to perform a rocking movement. The axis of rotation is parallel to the longitudinal axis of the work piece or coincides with the longitudinal axis of the work piece. The work piece is supported in the cutting position by means of rotatably mounted rollers.

AT285866 (EP1320438B1) discloses a wire saw comprising means for an oscillatory movement of the work piece with respect to the wire web. A pivot movement is superimposed with a linear movement of a sliding element yielding a swinging-type rocking movement.

WO9800273A1 discloses work piece rocking by pendulum movement using a two-bar linkage.

Work piece rocking using a rotary stage is disclosed by W02010006148. W02010006148 describes a stepper motor and a stepper motor controller as a driving mechanism for a rotary stage type rocking unit.

A pivot movement using arc guides in the work piece holder was disclosed e.g. in US5735258 mentioned above. US5735258 further discloses a driving mechanism for a rocking unit consisting of a reversible rotation mechanism, a pinion and a rack (a pair of gears which convert rotational motion into linear motion).

The rocking drives used in prior art are rather complicated, using high-maintenance and high precision components that are exposed to dirt and dust resulting from the cutting process.

A main problem is the play (or clearance, respectively) between the transmission components, e.g. pinion and rack, when changing the movement direction. Play can have a bad influence on the cutting quality. A further problem with this solution is a high abrasion on the pinion and on the rack segment, especially when contaminated with cutting fluid loaded with abrasives or abrasive pollution. It is practically impossible to completely close the chamber where these components are arranged from the work piece chamber. Today's solution is not completely sealed. When abrasive pollution enters the gear and drive area, the teeth of the pinion wear out very quickly because as the teeth of the pinion engage the teeth of the rack, their surfaces slide over each other while exerting a force on each other. The dirt now acts like teeth of a file (rasp).

The object of the invention is to solve this problem and to provide a rocking drive mechanism being more resistant to abrasive pollution and inner wear. The drive mechanism should not show significant play to ensure high cutting quality. The drive mechanism should be a simple construction, need less-maintenance and be cost-effective. It should not be necessary, that the component parts are high precision parts, and pre-tensioning used to prevent play in the system should be easy.

This object is achieved with a holding device for holding and rocking a work piece in a cutting machine, the holding device comprising:
- a supporting part,
- a rocking part, being movably mounted relative to the supporting part,
- a fixing mechanism arranged on the rocking part for fixing a work piece on the rocking part,
- a drive mechanism for moving said rocking part with respect to said supporting part, the drive mechanism comprising:
- at least one drive pulley rotatably mounted to the supporting part, and
- flexible pulling means cooperating with the drive pulley and having a first section and a second section extending from the drive pulley towards the rocking part, the end of the first section and the end of the second section being fixedly mounted to the rocking part,

so that the first pulling means section pulls the rocking part in a first moving direction when the drive pulley rotates in a first direction and the second pulling means section pulls the rocking part in a second moving direction being opposed to the first moving direction when the drive pulley rotates in opposite direction.

By the use of a drive pulley in cooperation with a flexible pulling means, like a belt, a wire or a chain, the drive mechanism becomes smoother. At the same time play can be reduced or eliminated easily by pre-tensioning the pulling means between the drive pulley and the rocking part. This holds particularly when the rocking direction is changed.

Due to the longitudinal extension and the flexibility of the pulling means, the drive pulley can be placed at a distance from that space where the work piece is cut. Pollution with abrasives and/or cutting fluid can be efficiently avoided.

An advantage of the invention is that there is no relative sliding movement between the drive pulley and the pulling mechanism (same principle as on a bike-chain and cassette). Due to the fixed mounting of the pulley means sections on the rocking part, there is also no relative sliding movement between the rocking part and the pulling means. Further it is easier to pre-stress the pulling means, e.g. the tension can easily be measured with a tension meter. The pre-stress may be applied with varying the position of the drive pulley. According to the state of the art, pre-tensioning is much more difficult because two metal parts are pre-tensioned, meaning that forces change much more dramatically when changing relative position of two component parts. Also the tension is hard to measure.

The first pulling means section of the flexible pulling means extends in a first direction and the second pulling means section extends in a second direction. The drive pulley is adapted to rotate in alternating direction as to make the rocking part move back and forth.

The term stationary supporting part means that the supporting part does not move with the rocking movement. Of course the supporting part may be moved with the whole holding device in a (linear) direction towards the wire web in a cutting machine. However, it would be also possible, that the wire web is moved towards the holding device.

For fixing the work piece on the rocking part, the fixing mechanism is usually adapted for cooperating with a work piece holder carrying the work piece. In such an embodiment the fixing mechanism does not get in direct contact with the work piece. Ingots, bricks or cores are usually glued onto a beam, e.g. a (glass or polymer) plate, which in turn is mounted to a work piece holder (also called fixture attachment). This work piece holder is then fixed by the fixing mechanism, ensuring reliable connection and an exact position of the work piece. Thus the wording "fixing a work piece on the rocking part" includes the possibility of fixing on the rocking part a work piece holder on which the work piece is (indirectly) mounted. With the term "holding and rocking a work piece" is also meant, that this includes the possibility of holding and rocking at least one intermediate member (such as a work piece holder and/or beam) attached to the work piece.

Preferably, the fixing mechanism and the actuator mechanism each has a cooperating surface for transmitting forces between the actuator mechanism and the fixing mechanism. This embodiment allows an efficient transmission of forces due to the cooperating surfaces which are adapted in a matching manner with respect to each other. In the sense of action and reaction the transmission of forces from the actuator mechanism to the fixing mechanism and/or vice versa are possible. E.g. a spring means of the fixing mechanism, as will be discussed later, may actually drive back the actuator mechanism.

Preferably, the fixing mechanism and the actuator mechanism are formed separated from each other. Due to the mechanical separation the holding device can be designed such, that the actuator mechanism is in contact with the fixing mechanism only during the actuation process, whereas they are "disconnected" during the rocking movement.

Preferably, the fixing mechanism comprises clamping means for clamping a work piece holder. This allows a mechanically reliable connection and an exact positioning between work piece or work piece holder and rocking part. Furthermore, this solution is applicable to work piece holder known in prior art.

Preferably, the fixing mechanism comprises tensioning means, preferably spring means, forcing the fixing mechanism in the fixing state. In the fixing state the work piece or work piece holder is fixedly held by the rocking part independent of the actuator mechanism. The spring means are tensioned such that when left alone, they fix/clamp the work piece or work piece holder. A force needs to be exerted on the springs to release the work piece. This is advantageous, since the actuator mechanism can be deactivated during the rocking movement. The fixing mechanism is "self"-fixing. Furthermore, the actuator mechanism just has to counter-act the spring means to bring the fixing mechanism in its releasing state. Various tensioning means are applicable with the present invention, such as a compressing spring, extension spring, diaphragm spring, counter weight, cylinders, etc..

Instead of a fixing means with a spring, a double-acting cylinder can also be used. In this case the spring is obsolete and there is a permanent cylinder force while clamping.

Preferably, in the releasing state of the fixing mechanism, the cooperating surface of the actuator mechanism presses against the cooperating surface of the fixing mechanism. This allows a simple and reliable mechanical solution.

Preferably, the cooperating surface of the fixing mechanism and the cooperating surface of the actuator mechanism are distanced from each other in the decoupled state of the actuator mechanism. This allows an undisturbed rocking movement of the rocking part without the fixing mechanism and the actuator mechanism colliding.

Preferably, the cooperating surface of the actuator mechanism is the face surface of an actuator rod. This allows a reliable mechanical solution.

Preferably, the actuator rod is linearly movable towards the fixing mechanism, preferably in a vertical manner. The linear movement allows an optimal transmission of forces between the actuator mechanism and the fixing mechanism.

Preferably, the actuator mechanism comprises at least one lever acting on the actuator rod. This allows a simple mechanical construction with increased forces.

Preferably, the actuator mechanism comprises a cylinder-piston unit for actuation. The cylinder-piston drive is easy controllable and yields the required forces.

Preferably, the fixing means comprises a receptacle for receiving a work piece holder. The receptacle allows easily placing the work piece holder in the required position and supports the fixing procedure. Preferably the receptacle is formed as a T-shaped slot.

Preferably, the cooperating surface of the fixing mechanism is the face surface of a plunger being adapted to clamp a work piece holder. This allows a direct transmission of forces.

Preferably, the fixing mechanism comprises at least one plunger which has an anchor-like end, for engaging with a work piece holder in an cooperating manner, and wherein preferably the plunger is forced upwardly by the spring means.

The work piece holder may be held by a series of anchor-like plungers, preferably arranged in a row extending along the work piece.

Preferably a drive mechanism for moving said rocking part with respect to said supporting part comprises:
- at least one drive pulley rotatably mounted to the supporting part, and
- flexible pulling means cooperating with the drive pulley and having a first section and a second section extending from the drive pulley towards the rocking part, the end of the first section and the end of the second section being fixedly mounted to the rocking part,
so that the first pulling means section pulls the rocking part in a first moving direction when the drive pulley rotates in a first direction and the second pulling means section pulls the rocking part in a second moving direction being opposed to the first moving direction when the drive pulley rotates in opposite direction.

By using a drive pulley in cooperation with a flexible pulling means, like a belt, a wire or a chain, the drive mechanism becomes smoother. At the same time play can be reduced or eliminated by pre-tensioning the pulling means between the drive pulley and the rocking part. This holds particularly when the rocking direction is changed.

Due to the longitudinal extension and the flexibility of the pulling means the drive pulley can be placed at a distance from that space where the work piece is cut. Pollution with abrasives and/or cutting fluid can be efficiently avoided.

An advantage of the invention is that there is no relative sliding movement between the drive pulley and the pulling mechanism (same principle as on a bike-chain and cassette). Due to the fixed mounting of the pulley means sections on the rocking part there is also no relative sliding movement between the rocking part and the pulling means. Further it is easier to pre-stress the pulling means, e.g. the tension can be measured with a tension meter. The pre-stress may be applied with varying the position of the drive pulley.

The first pulling means section thereby extends in a first direction and the second pulling means section extends in a second direction. The drive pulley is adapted to rotate in alternating direction as to make the rocking part moving back and forth.

The object is also achieved by means of a cutting machine for cutting a work piece, particularly a wire saw for cutting the work piece into a plurality of wafers, the cutting machine comprises a holding device for holding and rocking the work piece in the cutting machine, wherein the holding device is a holding device according to one of the preceding claims. Usually the wire saw has a wire web which is supported and driven by means of wire guiding rolls. The holding device is arranged in the cutting machine such, that a work piece which is fixed by the holding device may be drawn through the cutting wire or wire web.

The object is also achieved by means of method for fixing a work piece to a holding device according to one of the preceding claims, comprising the steps of:
- actuating the fixing mechanism by means of the actuator mechanism thereby forcing the fixing mechanism in the releasing state,
- placing a work piece or a work piece holder holding a work piece to the fixing mechanism of the holding device,
- bringing the fixing mechanism in the fixing state.

Preferably, a force is applied to the fixing mechanism counteracting a spring means which is responsible to hold the fixing means in the fixing state, then a work piece is placed in the holding device of a cutting machine, then the force on the fixing mechanism is released thus fixing the work piece or the work piece holder, followed by moving the rocking part relative to the supporting part by means of a rocking drive.

In the following further advantages and preferred embodiments are described.

The fixing mechanism is able to rock with the rocking part. The upper part of the plunger has a large flat ending which presses on the spring assembly. If the rocking unit is in an approximate vertical position, the lever system can be lowered and the spring assembly is activated: The plunger is moved downwards against the force of the spring. Without pressure applied the spring forces the plunger having an anchor at its lower end upwards, thus clamping the work piece holder if present.

A fixed lever system (as part of fixed part) applies force by means of e.g. pneumatic cylinders to the fixing mechanism (spring and plunger) on the rocking part. The previously continuous (non-detachable) mechanical connection to the spring assembly is now separated at a section point.

The actuator mechanism is capable of applying a force to the fixing means on the rocking part. The force can be for example generated by a pneumatic or hydraulic cylinder. Other possibilities are electrical cylinders and/or linear drives. The large force which is required to counteract the spring means and unlock the system is now generated outside the rocking unit. In this way, the rocking unit can be designed in a smaller and simple manner.

Preferably, the first section is fixed to the rocking part at a first mounting point and the second section is fixed to the rocking part at a second mounting point, and wherein in the moving direction of the mounting points relative to the supporting part the first mounting point is arranged at a distance from the second mounting point. This allows to realize the reciprocating drive in a very comfortable and simple manner.

Preferably, at least one of the pulling means sections is deflected by a deflection means, preferably a deflection pulley. Deflection means change the run of the pulling means and thus allow pre-tension. Pre-tensioning may also be done with additional deflection means or by displacing the drive pulley. Further the pulling direction of the ends of the pulling means sections can be oriented such, that it corresponds or at least converges towards the moving direction of the rocking part. Deflection means also allow to place the drive pulley spaced apart from the rocking part at sufficient distance as being protected from abrasives and/or cutting fluid. Deflection pulleys may be used for redirecting the pulling means. The main goal is to keep the length of the pulling means constant and control the force between the pulley and the pulling means. Preferably, the deflection pulleys are placed such that the path travelled by the pulling means is of constant length avoiding an expending and thus wear of the pulling means.

In a preferred solution standard ball bearings are used for mounting the deflection pulleys. There are several possibilities to build a deflection pulley. Other possible embodiments are disk with sliding bearing, fixed curvature with sliding surface.

Since the deflection pulleys are used only over a limited range of their rotational angle, sliding elements may be used instead or elements that are not rotational symmetric (e.g. a section of a pulley).

Preferably, the first pulling means section is deflected by a first deflection means and the second pulling means section is deflected by a second deflection means. This allows an equal, preferably symmetrical, pulling force distribution and an uniform rocking motion.

There are of course other possible solutions with more or less than two deflection pulleys. The function is always the same. The deflection pulleys divert the drive belt and ideally keep the length of the path of the pulling means constant.

Preferably, wherein the deflection means is(are) rotatably mounted to the supporting part. This avoids a sliding between the movable components, eventually causing slip.

Preferably, the first pulling means section and the second pulling means section are deflected in opposed directions and/or wherein the run of the pulling means sections is symmetrical. With this measure the uniformity and smoothness of the rocking movement is further increased

Preferably, the first pulling means section and the second pulling means section are deflected away from each other. The deflected portions each run in an outward direction. This allows to guide the pulling means sections in a place saving manner side-by-side between the drive pulley and the deflection means.

Preferably, the pulling means is a belt. A belt constitutes a strong and reliable mechanical transmission component.

There are several different drive belt possibilities. Almost all of them could be used, even a chain is possible. Other possible embodiments are a flat belt, a v-shaped belt or a toothed belt.

Preferably, the belt is a toothed belt and the drive pulley is a toothed pulley. This allows to increase the cooperation between pulley and pulling means and reduces slip.

Preferably, the pulling means has a Omega(Ω)-like run, wherein the top of the Omega(Ω)-like run engages the periphery of the drive pulley. This is a symmetrical and at the same time space-saving solution.

Preferably, the holding device comprises a partition panel, the drive pulley and the upper part of the pulling means being arranged above the partition panel and the lower part of the pulling means sections and the mounting points on the rocking part being arranged below the partition panel, wherein the pulling means sections extend through a passage in the partition panel. The partition panel efficiently protects the active drive parts, such as the drive pulley from abrasives and/or cutting fluid.

Preferably, the rocking part is guided by means of arc-shaped guides on the supporting part. This allows a very preferred moving type with high quality cutting results.

The center of rocking movement of the work piece may e.g. lay in the work piece cross section. The center is the middle point of a circle going thru the arc-shaped guides.

Preferably, the connection between the pulling means sections and the rocking part at the mounting points has a toothing. This further increases the reliability of the mounting between pulling means sections and rocking part without deforming the toothing.

Preferably, the pulling means section(s) is (are) deflected in, or parallel to, a direction essentially converging towards the moving direction of the rocking part during the rocking movement. This efficiently ensures that the pretension of the pulling means is not reduced during all stages of the rocking movement.

Preferably, the pulling means section(s) is (are) deflected such that its (their) deflected portion(s) abut(s) against a contact surface of the rocking part, and wherein preferably the surface is an arched surface. In this manner the deflected portions of the pulling means section rest on the contact surface without sliding on it.

Preferably, the arc-shaped guides guiding the rocking part and the contact surface on with the pulling means section abut run parallel to each other in order not to stretch the pulling means. Moreover, they preferably have the same center point.

Preferably, the holding device comprises: a fixing mechanism arranged on the rocking part for fixing a work piece on the rocking part, the fixing mechanism can be actuated between a releasing state and a fixing state; and a mechanical actuator mechanism mounted on the supporting part for mechanically actuating said fixing mechanism, wherein the actuator mechanism can be brought in a decoupled state, in which the actuator mechanism is decoupled from the fixing mechanism, such that the actuator mechanism is decoupled from the rocking movement of the rocking part relative to the supporting part.

The actuator mechanism can be brought from an actuating state (actuating the fixing mechanism) into a non-actuating decoupled state (being independent of the fixing mechanism) and vice versa.

Due to decoupling from the fixing mechanism the actuator mechanism stays stationary with respect to the movement of the rocking part relative to the supporting part. The mechanical actuator mechanism cooperating with the fixing mechanism provides an automatically controllable mounting/releasing of the work piece to/from the holding device. According to the invention the actuator mechanism is spatially separated from the fixing mechanism, wherein the actuator mechanism is related to the stationary supporting part and the fixing mechanism is related to the movable rocking part. The actuator mechanism is stationary with respect to the movement of the rocking part relative to the supporting part, i.e. the actuator mechanism does not follow the rocking movement. In the inventive solution, the whole clamping system with its actuation is divided in a rocking part and a fixed or stationary part. The large force which is required to actuate the fixing mechanism is generated outside the rocking part.

Tightening screws on the rocking unit manually is not necessary anymore. The fixing process is faster and the reproducibility of the clamping is improved.

Further embodiments of the invention are indicated in the figures and in the dependent claims. The list of reference marks forms part of the disclosure. The invention will now be explained in detail by the drawings. In the drawings:
Fig. 1 shows a wire cutting machine with a holding device for holding a work piece,
Fig. 2 shows a holding device of the present invention,
Fig. 3 shows in more detail a holding device with the rocking part being in a slightly tilted position,
Fig. 4 shows the holding device of Fig. 3 with the rocking part being in a more tilted position,
Fig. 5 shows a drive mechanism for the rocking movement of the rocking part,
Fig. 6 shows the drive mechanism of Fig. 5 in a perspective view,
Fig. 7 shows schematically a holding device with the actuator mechanism for the fixing mechanism and the drive mechanism for the rocking movement,
Fig. 8 shows an embodiment with an asymmetric run of the pulling means.

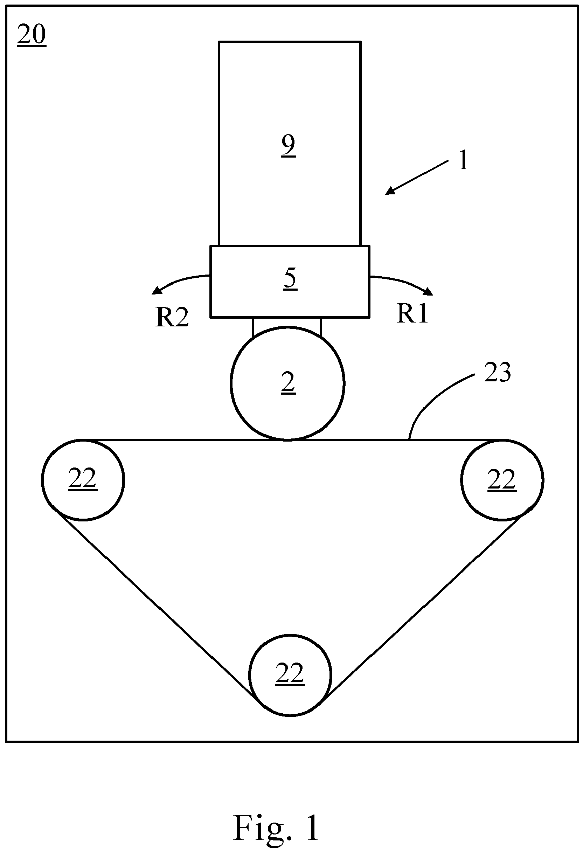

Fig. 1 shows a wire cutting machine 20 with a wire web 23 supported by wire guiding rolls 22 for cutting a work piece 2, particularly an ingot, brick or core, into a plurality of wafers. A holding device 1 for holding and rocking the work piece 2 in a cutting position is arranged above the wire web 23. The holding device 1 comprises a supporting part 9 and a rocking part 5 being movably mounted relative to the supporting part 9. The rocking movement of the rocking part 5 is indicated by arrows R1 and R2.

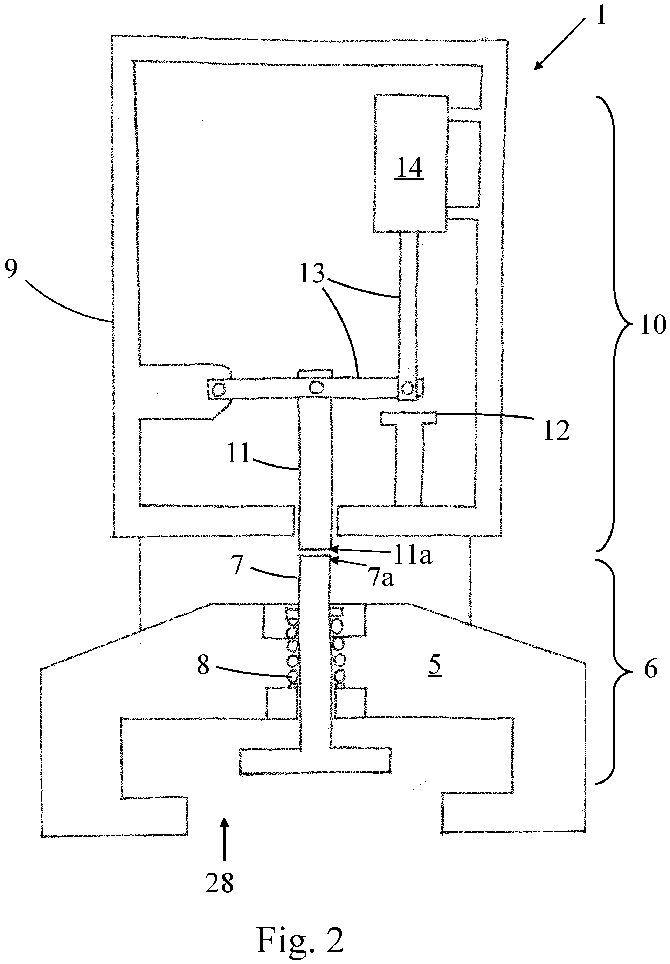

Fig. 2, 3 and 4 show the holding device 1 in more detail. A fixing mechanism 6 (comprising spring means 8 and plunger 7) is arranged on the rocking part 5 for fixing a work piece 2 on the rocking part 5, the fixing mechanism 6 can be actuated between a releasing state and a fixing state.

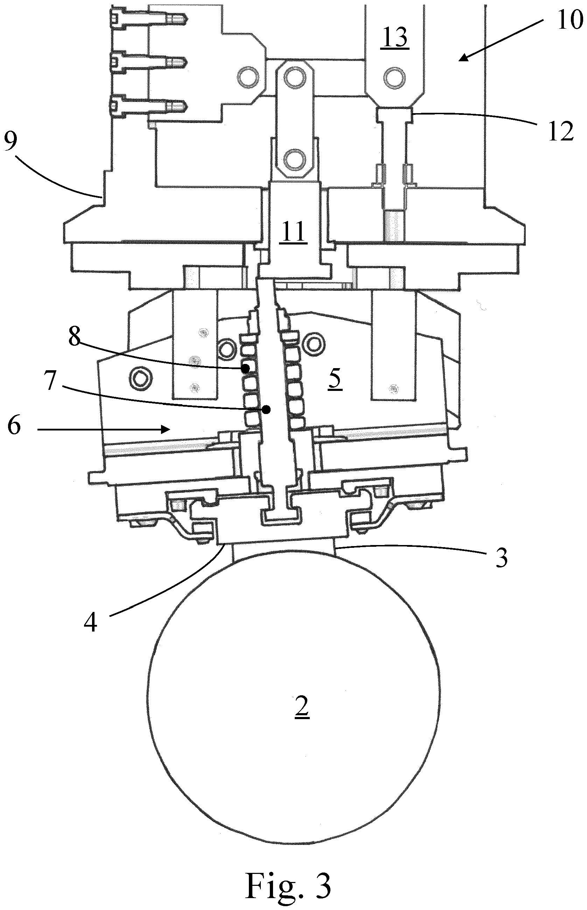

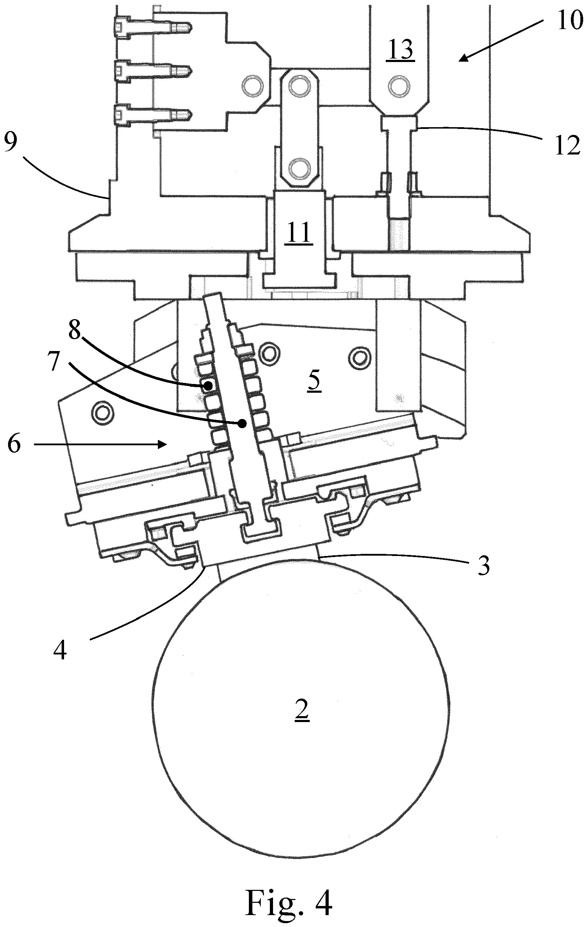

The fixing means 6 comprises a receptacle 28 in form of a T-shaped slot in the rocking part 5 for receiving a work piece holder 4 (shown in Fig. 3 and 4). The work piece holder 4 is laterally inserted into the receptacle 28. A vertically movable plunger 7 has an anchor-shaped lower end for cooperating with a corresponding recess in the work piece holder 4. By upwardly pulling the plunger 7 the work piece holder 4 is fixedly clamped within the receptacle 28. Instead of a clamping means, the fixing mechanism 6 may comprise a locking means.

The fixing mechanism 6 of Fig. 2 comprises spring means 8 forcing the plunger 7 upward and thus the fixing mechanism 6 into the fixing state.

The upper end of the plunger 7 has a cooperating surface 7a for cooperating with a cooperating surface 11 a of an actuator rod 11 or upper plunger being arranged opposed to the cooperating surface 7a. The actuator rod 11 belongs to a mechanical actuator mechanism 10 arranged in the supporting part 9. The cooperating surfaces 11a and 7a may be provided with intermediate members for better cooperation or for protection.

The mechanical actuator mechanism 10 is mounted on the supporting part 9 for mechanically actuating said fixing mechanism 6, thus the actuator mechanism 10 is stationary with respect to the movement of the rocking part 5 relative to the supporting part 9.

The fixing mechanism 6 and the actuator mechanism 10 are formed mechanically separated from each other and cooperate only via their cooperating surfaces 7a, 11a or an intermediate member (not shown). Actuator mechanism 10 comprises e.g. a (pneumatic, hydraulic or electric) cylinder-piston unit 14 as actuation drive, a lever system comprising a vertical lever 13 which is linked to a horizontal lever 13, which in turn is linked to the actuator rod 11 and thus acts on the actuator rod 11. The horizontal lever 13 is pivotably mounted to the supporting part 9 and the cylinder-piston unit 14 is fixedly mounted to the supporting part 9. The actuator rod 11 is linearly movable towards the fixing mechanism 6 and its plunger 7 in a vertical direction. The cooperating surface 11a of the actuator mechanism 10 is the lower end of the actuator rod 11. Instead of a cylinder-piston any other driving means may be used.

In order to bring the fixing mechanism 6 in its releasing state, the cylinder-piston unit 14 is activated and the cooperating surface 11a of the actuator mechanism 10 presses downwardly against the cooperating surface 7a of the fixing mechanism 6 and thus counteracts the spring force of the spring means 8. The plunger 7 with its anchor-shaped end moves downwardly and releases the work piece holder 4.

Fig. 2 shows the decoupled state, in which the actuator mechanism 10 is decoupled from the fixing mechanism 6. In the present embodiment the decoupled state is characterized by the fact, that actuator mechanism 10 and fixing mechanism 6 do not touch or are arranged at a small distance from each other.

Preferably, the mechanisms 6, 10 are designed such, that the cooperating surface 7a of the fixing mechanism 6 and the cooperating surface 11 a of the actuator mechanism 10 are distanced from each other in the decoupled state of the actuator mechanism 10 (small gap in Fig. 2), thus in the fixing state of the fixing mechanism 6, allowing the rocking part 5 to freely pivot. This is not what is shown in Fig 3.

When fixing a work piece 2, following steps are performed: actuating the fixing mechanism 6 by means of the actuator mechanism 10 thereby forcing the fixing mechanism 6 into the releasing state; placing a work piece 2 or a work piece holder 4 holding a work piece 2 to the fixing mechanism 6 of the holding device 1; and bringing the fixing mechanism 6 into the fixing state, e.g. by releasing the force on the fixing mechanism 6.

In the preferred embodiment of Fig. 2 the actuator mechanism 10 comprises a stop 12 limiting the movement of the actuator rod 11, preferably when a lever 13 abuts against the stop 12, thus preventing the spring means 8 to be tensioned too much. Preferably, the stop 12 is adjustable in its height to control the action of the actuator mechanism 10.

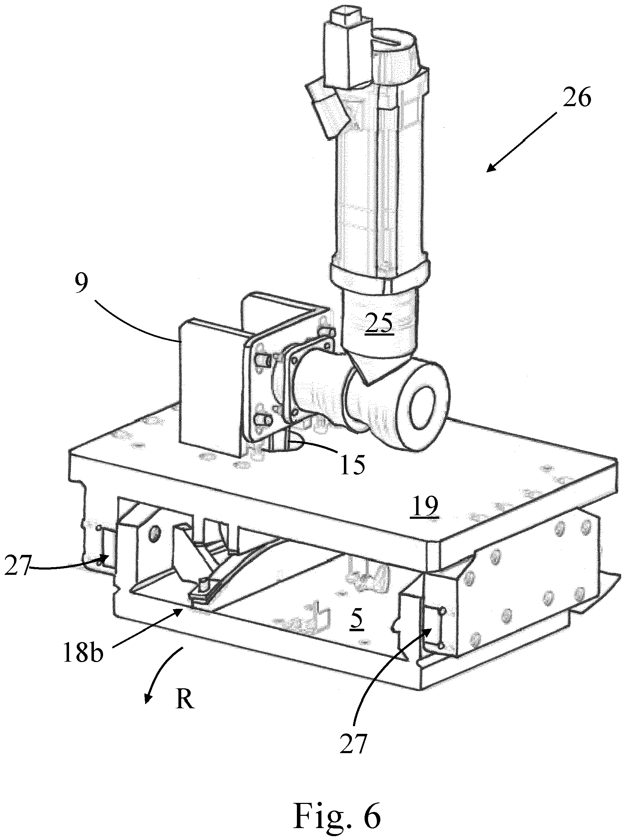

Fig. 3 and 4 show the rocking part 5 during the rocking movement. The rocking part is preferably guided by means of arched guides 27 to perform a pivot movement (Fig. 6). In an alternate embodiment it is of course possible to perform a linear movement of the rocking part 5.

In the "rocking" position of Fig. 3 the rocking part 5 is approximately vertical and only slightly tilted with respect to the supporting part 9. Releasing or unlocking the work piece 2 by pressing the actuator rod 11 against the plunger 7 is just possible.

In the "rocking" position of Fig. 4 a cooperation of rod 11 and plunger 7 is not possible anymore and the fixing mechanism 6 cannot be released.

The following embodiments relate to the drive mechanism for moving the rocking part 5.

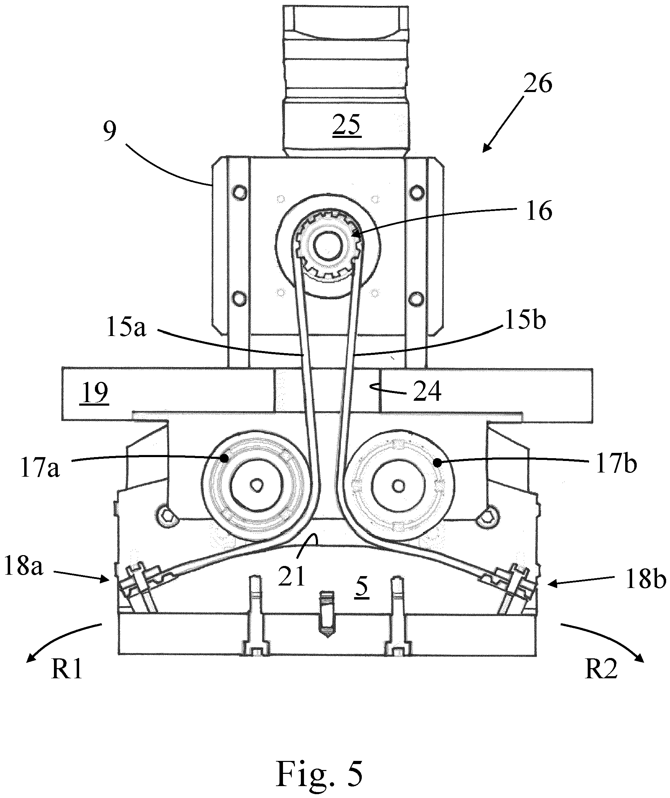

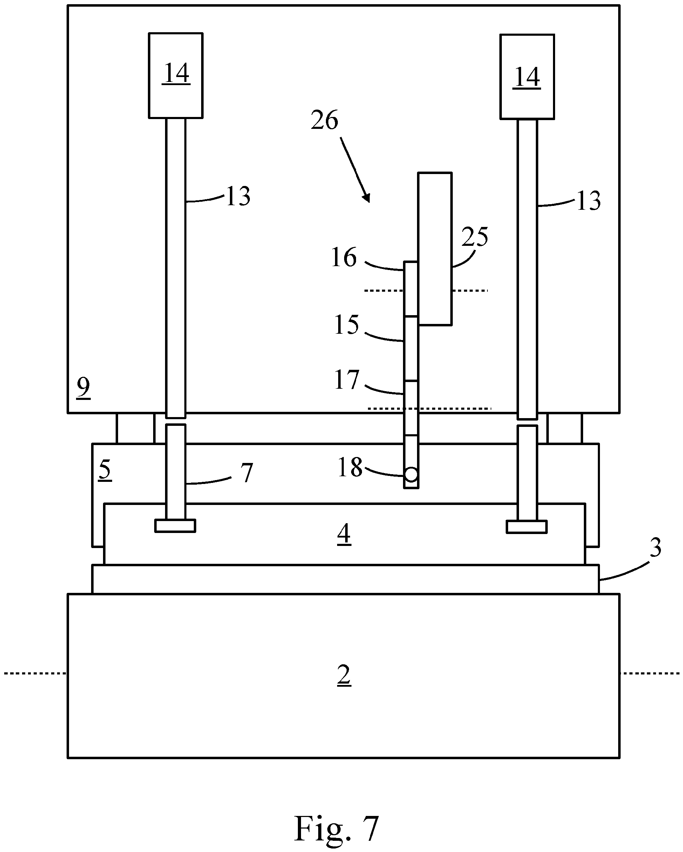

Fig. 5 shows another view on the holding device 1. A drive mechanism 26 is provided to perform the rocking movement of the rocking part 5 with respect to the stationary supporting part 9. The drive mechanism 26 comprises a drive pulley 16 rotatably mounted to the supporting part 9 and connected to a drive 25, e.g. a motor, and a flexible pulling means 15 in form of a belt. The rotational axis of the drive pulley 16 (indicated in Fig. 7) is stationary with respect to the supporting part 9 and thus to the movement of the rocking part 5 relative to the supporting part 9.

The belt is a toothed belt and the drive pulley 16 is a toothed pulley. Alternate embodiments use as pulling means a wire or a transmission chain or similar means. The pulling means 15 engages the periphery of the drive pulley 16 and has a first section 15a and a second section 15b extending from the drive pulley 16 towards the rocking part 5, the first section 15a and the second section 15b being fixed with their ends to the rocking part 5.

Drive pulley 16 and pulling means 15 cooperate in such a manner, that the first pulling means section 15a pulls the rocking part 5 in a first moving direction R1 when the drive pulley 16 rotates in a first rotating direction and the second pulling means section 15b pulls the rocking part 5 in a second moving direction R2 being opposed to the first moving direction R1 when the drive pulley 16 rotates in a second rotating direction, which is opposed to the first rotating direction. The drive 25 is adapted in cooperation with the drive pulley 16 such as to transmit in its active state a permanently alternating rotational motion to the drive pulley 16.

The first section 15a is fixed to the rocking part 5 at a first mounting point 18a and the second section 15b is fixed to the rocking part 5 at a second mounting point 18b. In the moving direction of the mounting points 18a, 18b relative to the supporting part 9 the first mounting point 18a is arranged at a distance from the second mounting point 18b. The connection between the ends of the pulling means sections 15a, 15b and the rocking part 5 at the mounting points 18a, 18b has a toothing for increasing the reliability of fixation.

In the preferred embodiment of Fig. 5 the pulling means sections 15a, 15b are deflected by deflection means 17a, 17b in form of rotatable deflection pulleys. Here, the first pulling means section 15a is deflected by a first deflection means 17a and the second pulling means section 15b is deflected by a second deflection means 17b. The deflection means 17a, 17b are mounted to the supporting part 9.

Instead of a rotatably mounted deflection pulley a stationary guide, e.g. in the form of a circle segment would be also possible.

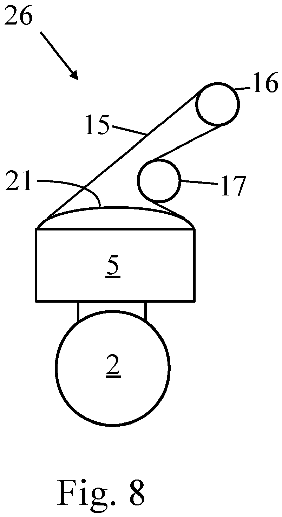

The first pulling means section 15a and the second pulling means section 15b are deflected in opposed directions to the outside (i.e. they are deflected away from each other), thereby making an Omega(Ω)-like run, wherein the top of the Omega(Ω)-like run engages the periphery of the drive pulley 16. It has to be noted, that the deflection means 17a and 17b may be placed wider apart, thus turning from an Ω-shave more into a Lambda(/\)-like run or a run resembling a Gaussian distribution. The latter options are understood as falling under the wording "Ω-tike" run. In the preferred embodiment the run of the pulling means sections 15a, 15b is symmetrical yielding symmetrical pulling forces, however, also a non-symmetrical run would be possible as e.g. shown in Fig. 8.

The pulling means sections 15a, 15b are deflected in, or parallel to, a direction essentially converging towards the moving direction of the rocking part 5 during the rocking movement.

In the preferred embodiment of Fig. 5 the rocking part 5 has a contact surface 21 facing towards the supporting part 9. The contact surface 21 is arched towards the supporting part 9. The pulling means sections 15a, 15b are deflected such that their deflected portions abut against the contact surface 21 of the rocking part 5. This allows a smooth and efficient transmission of pulling forces getting essentially parallel to the rocking moving direction. Preferably the contact surface 21 is parallel to the moving direction of the rocking part 5.

Fig. 6 shows a perspective view on the holding device 1 with the drive mechanism 26. In this embodiment holding device 1 comprises a partition panel 19, wherein the drive pulley 16 and the upper part of the pulling means 15 being arranged above the partition panel 19 and the lower part of the pulling means sections 15a, 15b and the mounting points 18a, 18b on the rocking part 5 being arranged below the partition panel 19. The pulling means sections 15a, 15b extend through a passage 24 provided in the partition panel 19. The partition panel 19 protects a main portion of the drive mechanism 26 from dirt and dust.

As indicated in Fig. 5, the rocking part 5 is guided by means of arc-shaped guides 27 on the supporting part 9. In order to achieve a linear rocking movement also linear guides would be possible.

Fig. 7 shows a schematic illustration of how the drive mechanism 26 for the rocking movement and the actuator mechanism 10 for cooperating with the fixing mechanism 6 can be integrated in a holding device 1. As can be seen from Fig. 7 all active drive parts are arranged spaced from the work piece 2 and thus from abrasives and cutting fluid resulting from the cutting process. Ideally, the drive mechanism 26 is positioned in the center between the cylinder―piston units 14.

Fig. 8 shows an embodiment with an asymmetric run of the pulling means 15. As can be seen from Fig. 8 only one of the pulling means sections is deflected by a deflection means 17. Any number of deflection means may be used and they may even be omitted.

The invention is of course not restricted to the embodiments shown. E.g. the drive pulley and the deflection pulleys may change position with respect to the embodiments shown in the Figs. It principally doesn't matter in which position the drive pulley is. It can be changed into a deflection pulley position, especially with a non-teethed drive belt.

Particularly, aspects concerning the actuation of the fixing mechanism and aspects concerning the rocking drive mechanism may be combined in every possible manner yielding further advantageous effects. It has to be noted, that especially the arrangement of the actuator mechanism and the drive pulley on the supporting part is a preferred embodiment, since in this case the drive/actuation elements sensitive to dirt and dust are independent from the rocking part (separated or spaced apart from the work piece, respectively).

### List of reference marks

- 1: Holding device
- 2: work piece
- 3: plate
- 4: work piece holder
- 5: rocking part of the holding device 1
- 6: fixing mechanism
- 7: plunger
- 8: spring means
- 9: supporting part
- 10: actuator mechanism
- 11: actuator rod
- 12: stop
- 13: lever
- 14: cylinder―piston unit
- 15: pulling means
- 15a: first pulling means section
- 15b: second pulling means section
- 16: drive pulley
- 17a, 17b: deflection means
- 18a,: 18b mounting points
- 19: partition panel
- 20: cutting machine
- 21: arched surface
- 22: wire guide roll
- 23: cutting wire
- 24: passage
- 25: drive, e.g. motor
- 26: drive mechanism
- 27: arc-guide
- 28: receptacle
- R: moving direction
- R1: first moving direction of the rocking part 5
- R2: second moving direction of the moving part 5

## Claims

1. Holding device (1) for holding and rocking a work piece (2) in a cutting machine (20), the holding device (1) comprising:
- a supporting part (9),
- a rocking part (5), being movably mounted relative to the supporting part (9),
- a fixing mechanism (6) arranged on the rocking part (5) for fixing a work piece (2) on the rocking part (5),
- a drive mechanism (26) for moving said rocking part (5) with respect to said supporting part (9), the drive mechanism (26) comprising:
- at least one drive pulley (16) rotatably mounted to the supporting part (9), and
- flexible pulling means (15) cooperating with the drive pulley (16) and having a first section (15a) and a second section (15b) extending from the drive pulley (16) towards the rocking part (5), the end of the first section (15a) and the end of the second section (15b) being fixedly mounted to the rocking part (5),
so that the first pulling means section (15a) pulls the rocking part (5) in a first moving direction (R1) when the drive pulley (16) rotates in a first direction and the second pulling means section (15b) pulls the rocking part (5) in a second moving direction (R2) being opposed to the first moving direction (R1) when the drive pulley (16) rotates in opposite direction.

2. Holding device according to claim 1, wherein the first section (15a) is fixed to the rocking part (5) at a first mounting point (18a) and the second section (15b) is fixed to the rocking part (5) at a second mounting point (18b), and wherein in the moving direction of the mounting points (18a, 18b) relative to the supporting part (9) the first mounting point (18a) is arranged at a distance from the second mounting point (18b).

3. Holding device according to claim 1 or 2, wherein at least one of the pulling means sections (15a, 15b) is deflected by a deflection means (17a, 17b), preferably a deflection pulley.

4. Holding device according to claim 3, wherein the first pulling means section (15a) is deflected by a first deflection means (17a) and the second pulling means section (15b) is deflected by a second deflection means (17b).

5. Holding device according to claim 3 or 4, wherein the deflection means (17a, 17b) is(are) rotatably mounted to the supporting part (9).

6. Holding device according to one of the claims 3 to 5, wherein the first pulling means section (15a) and the second pulling means section (15b) are deflected in opposed directions and/or wherein the run of the pulling means sections (15a, 15b) is symmetrical.

7. Holding device according to claim 6, wherein the first pulling means section (15a) and the second pulling means section (15b) are deflected away from each other.

8. Holding device according to one of the preceding claims, wherein the pulling means (15) is a belt, and wherein preferably the belt is a toothed belt and the drive pulley (16) is a toothed pulley.

9. Holding device according to one of the claims 3 to 9, wherein the pulling means (15) has a Omega(Ω)-like run, wherein the top of the Omega(Ω)-like run engages the periphery of the drive pulley (16).

10. Holding device according to one of the preceding claims, wherein the holding device (1) comprises a partition panel (19), the drive pulley (16) and the upper part of the pulling means (15) being arranged above the partition panel (19) and the lower part of the pulling means sections (15a, 15b) and the mounting points (18a, 18b) on the rocking part (5) being arranged below the partition panel (19), wherein the pulling means sections (15a, 15b) extend through a passage (24) in the partition panel (19).

11. Holding device according to one of the preceding claims, wherein the rocking part (5) is guided by means of arc-shaped guides (27) on the supporting part (9).

12. Holding device according to one of the preceding claims, wherein the connection between the pulling means sections (15a, 15b) and the rocking part (5) at the mounting points (18a, 18b) has a toothing.

13. Holding device according to one of the claims 3 to 13, wherein the pulling means section(s) (15a, 15b) is (are) deflected in, or parallel to, a direction essentially converging towards the moving direction of the rocking part (5) during the rocking movement.

14. Holding device according to one of the claims 3 to 14, wherein the pulling means section(s) (15a, 15b) is (are) deflected such that its (their) deflected portion(s) abut(s) against a contact surface (21) of the rocking part (5), and wherein preferably the surface (21) is an arched surface.

15. Cutting machine (20) for cutting a work piece (2), particularly a wire saw for cutting an ingot, brick or core into a plurality of wafers, the cutting machine (20) comprises a holding device (1) for holding and rocking the work piece (2) in the cutting machine (20), wherein the holding device (1) is a holding device according to one of the preceding claims.
